# FASCICULE DE BREVET EUROPEEN

(11) **EP 2 160 904 B1**
(45) Date de publication et mention de la délivrance du brevet: **21.05.2014**
(21) Numéro de dépôt: 08826272.0
(22) Date de dépôt: 12.06.2008
(51) Int. Cl.: H04N 9/04, H04N 5/30, H04N 1/00, H04N 5/238, G06T 5/00

(54) **CAPTEUR D'IMAGES NUMERIQUES, PROCEDE D'ACQUISITION ET DE RECONSTRUCTION D'IMAGES, ET SYSTEME DE MISE EN UVRE**
DIGITALER BILDSENSOR, BILDERFASSUNGS- UND REKONSTRUKTIONSVERFAHREN SOWIE SYSTEM ZU DESSEN ANWENDUNG
DIGITAL IMAGE SENSOR, IMAGE CAPTURE AND RECONSTRUCTION METHOD AND SYSTEM FOR IMPLEMENTING SAME

(30) Priorité: 12.06.2007 FR 0704181
(43) Date de publication de la demande: 10.03.2010
(73) Titulaire: Centre National de la Recherche Scientifique (CNRS), 75794 Paris Cedex 16 (FR); Université Joseph Fourier, 38041 Grenoble Cedex (FR)
(72) Inventeur: ALLEYSSON, David, F-38430 Moirans (FR); CHAIX DE LAVARENE, Brice, F-84210 Beaumont de Pertuis (FR); HERAUT, Jeanny, F-38120 Saint Egreve (FR)
(74) Mandataire: Cabinet Plasseraud
(86) Numéro de dépôt international: PCT/FR2008/000806
(87) Numéro de publication internationale: WO 2009/007543

(56) Documents cités:
- JP-A- 9 168 157
- US-A1- 2003 210 332
- US-B1- 7 123 299
- BRICE CHAIX DE LAVARÈNE, DAVID ALLEYSSON, JEANNY HÉRAULT: "Traitement non lineaire uniforme pour la reconstruction d'une mosaique chromatique repartie aleatoirement" ACTES DU 20ÈME COLLOQUE GRETSI : TRAITEMENT DU SIGNAL ET DES IMAGES, vol. 1, 6 septembre 2005 (2005-09-06), - 9 septembre 2005 (2005-09-09) pages 347-350, XP009095106 GRETSI 2005, Louvain-La-Neuve ISBN: 2-87463-001-2
- RAMANATH R ET AL: "DEMOSAICKING METHODS FOR BAYER COLOR ARRAYS" JOURNAL OF ELECTRONIC IMAGING, SPIE / IS & T, US, vol. 11, no. 3, juillet 2002 (2002-07), pages 306-315, XP001122626 ISSN: 1017-9909
- MANU PARMAR ET AL: 'Color filter array design based on a human visual model' PROC. SPIE 5299, COMPUTATIONAL IMAGING II, [en ligne] 21 Mai 2004, XP055072405 Extrait de l'Internet: <URL:http://proceedings.spiedigitallibrary. org/proceeding.aspx?articleid=837300> [extrait le 2013-07-23]

## Description

La présente invention concerne un capteur couleur dédié à l'acquisition d'images, un procédé d'acquisition et de reconstruction d'images, ainsi qu'un système de mise en oeuvre de ce procédé.

La présente invention se situe dans le domaine du traitement numérique d'images et de séquences d'images, lors de leur acquisition par une caméra et leur reconstruction et sauvegarde en format brut ou compressé.

L'acquisition d'images couleurs, par exemple à l'aide d'appareils photographiques et de vidéo numérique, inclut des post-traitements après l'acquisition pour l'amélioration de la qualité des images numériques captées, en liaison avale avec des systèmes de compression d'images et de représentation des images couleurs.

Or, pour reproduire une image de haute qualité visuelle, la plupart des caméras ou des appareils photographiques numériques actuels utilisent un capteur devant lequel est placée une matrice de filtres couleur.

Chaque filtre couleur étant un composant transparent qui laisse passer une partie de la lumière et en absorbe une autre, la répartition spectrale de la transparence définit la couleur du filtre.

Les images captées sont composées de « pixels », le pixel représentant un composant numérique de l'image, caractérisé par sa position (ligne/colonne) dans l'image et par sa valeur numérique, correspondant à un niveau de gris ou de couleur.

On entend par « taille » de l'image le nombre de lignes multiplié par le nombre de colonnes, c'est-à-dire le nombre de pixels.

Les termes « horizontal / vertical » sont en général utilisés respectivement pour déterminer la taille d'une image en hauteur (nombre de lignes) et en largeur (nombre de colonnes).

Ladite matrice de filtres couleur donne à chaque pixel du capteur une sensibilité spectrale différente pour permettre la représentation de la couleur. En contrepartie, avec cette méthode, une seule couleur est échantillonnée à chaque pixel. Par conséquent, une étape de démosaïçage (c'est-à-dire d'interpolation des trois composantes de la couleur « RGB, Red, Green, Blue » en langue anglaise, donc rouge, vert et bleu), ou d'estimation de la luminance et d'interpolation des chrominances, sont nécessaires pour reconstruire une image couleur disposant de trois sensibilité spectrales par pixels. Dans la présente description, on entend par « luminance » la composante achromatique de l'image, et par « chrominance » ou « chrominances » ou « trois composantes de la chrominance», la composante chromatique de l'image étant dépourvue de l'information de luminance.

Afin de réduire la complexité du traitement, l'art antérieur connaît de nombreuses solutions.

Par exemple, la matrice de filtres couleur la plus répandue actuellement, et disposée dans un capteur est le CFA (« Color Filter Array » en anglais, tableau ou matrice de filtres de couleurs), dite de Bayer. Cette matrice est périodique et est composée d'une alternance régulière, de pixels rouges et verts une ligne sur deux, et une alternance de pixels verts et bleus sur l'autre ligne.

Le problème majeur de cette matrice est que l'interpolation génère des artefacts visibles qui nuisent à la qualité visuelle après la reconstruction de l'image. Une des techniques pour réduire la génération d'artéfacts est d'utiliser quatre photosites pour reconstruire un seul pixel. Chaque photosite représente une cellule photoélectrique, ce photosite étant sensible à l'intensité lumineuse dans une gamme de longueur d'onde (rouge, vert ou bleu) qu'il traduit en produisant un petit courant électrique relatif à la sensibilité spatiale. La combinaison des courants de quatre photosites permet la construction des trois couleurs du pixel. Néanmoins, cette technique augmente la complexité du capteur, car le nombre de pixels utiles pour une image numérique est réduit par un facteur quatre en comparaison avec le nombre de photosites.

D'autres méthodes connues visant à remplacer ladite méthode de Bayer, par exemple par différence d'absorption des photons, ou de la création de super CDD (« Charged Coupled Device », Dispositif à transfert de charge en langue anglaise) à configuration hexagonale, modifient complètement le post-traitement de l'image acquise par rapport à un filtrage de Bayer. Cela se traduit par l'augmentation de la complexité des procédés et des systèmes d'acquisition et de traitement.

Par ailleurs, des études comparatives des méthodes de reconstruction les plus connues (par exemple, la méthode du gradient corrigé par le Laplacien, la méthode des coefficients prédéterminés, la méthode de projection alternée, les méthodes de sélection des fréquences, les méthodes de Wiener), effectuée par mesures objectives PSNR (« Pick Signal to Noise Ratio », pic du rapport signal à bruit, en langue anglaise) démontre clairement qu'il existe un compromis entre la qualité de l'image reconstruite et la complexité de la méthode de reconstruction. Une haute qualité de l'image reconstruite exige une haute complexité de l'appareil d'acquisition et/ou de la méthode de reconstruction. La complexité représente la consommation en ressources matérielles et informatiques, telles que par exemple la vitesse de calcul, la taille de la mémoire opérationnelle pour l'exécution du procédé, la taille de la mémoire de sauvegarde des résultats, la consommation en puissance de calcul et en temps de calcul. La complexité d'un système d'acquisition par caméra est aussi liée aux composants matériels, tel que le capteur en terme de performance, de robustesse, de taille, et de coût.

Aussi, du point de vue de la perception subjective des images reconstruites, les algorithmes performants en terme de mesure objective, réduisent certes certains artefacts, mais ont tendance à augmenter d'autres défauts visuels.

Pour contourner le problème de génération des artefacts, il est connu d'utiliser un arrangement aléatoire ou pseudo aléatoire des filtres de couleurs à la surface du capteur. En effet, il est connu que l'échantillonnage aléatoire n'est pas contraint au phénomène d'aliasing ou repliement spectral. Pour une répartition aléatoire ou autrement dit non périodique des filtres de couleur, on limite dès lors le mélange de l'information spatiale et chromatique dans la représentation de l'image et on réduit en conséquence l'apparition d'artéfacts.

Un capteur comprenant un agencement aléatoire est par exemple connu de la publication de Chaix de Laverne et al. « Traitement non linéaire uniforme pour la reconstruction d'une mosaïque chromatique répartie aléatoirement », du brevet US 7123299 B1 ou de la demande de brevet US 2003/0210332.

Un capteur formé de la répétition d'un motif de base comprenant un agencement aléatoire ou non-périodique est connu de la demande de brevet JP-H-09 168 157 ou de la publication "color filter array design based on a human visual model".

Cependant, une répartition aléatoire ou non périodique des filtres de couleur sur la matrice rend difficile l'interpolation des couleurs manquantes car le voisinage d'un pixel donné n'est pas connu et varie d'une zone de l'image à l'autre, contrairement au cas d'un motif régulier comme celui de Bayer.

L'invention vise à pallier cet inconvénient de l'état de la technique.

Pour ce faire, l'idée à la base de l'invention est de combiner l'avantage de la répartition aléatoire qui permet de réduire des artéfacts, tout en gardant une certaine régularité dans la matrice formant le capteur pour que l'interpolation des couleurs manquantes ne soit pas trop complexe.

La présente invention vise donc à dépasser le compromis entre la complexité d'un appareil d'acquisition en liaison avec la complexité de la reconstruction d'une image captée et la qualité de cette image, tout en tendant vers une haute qualité de l'image, correspondant à la perception subjective de l'oeil humain.

La présente invention part du modèle de répartition aléatoire des couleurs dans l'oeil humain pour permettre l'augmentation de la qualité de l'image perçue par la réduction d'artefacts.

Ainsi, l'invention propose un arrangement pseudo aléatoire (encore appelé ci-après « non périodique ») des filtres couleur à la surface d'un capteur, l'échantillonnage pseudo aléatoire n'étant pas contraint au phénomène de repliement spectral, réduit par conséquent la cohérence des erreurs générées. La combinaison de cet arrangement pseudo aléatoire avec un procédé de reconstruction de l'image captée, approprié à cet arrangement, optimise le rapport qualité de l'image captée / complexité du procédé de reconstruction et de l'appareil d'acquisition.

On entend par « motif pseudo aléatoire », un motif d'un capteur comprenant des filtres couleur disposés avec un arrangement irrégulier, préalablement indéterminé, le qualificatif « pseudo » étant utilisé du fait qu'un caractère purement aléatoire n'est pas atteignable par des traitements informatiques, effectué par les calculateurs numériques, qui sont des appareils déterministes.

Plus précisément, la présente invention a pour objet un capteur d'acquisition d'images numeriques selon la revendication 1.

De la sorte, l'utilisation de motifs de base pseudoaléatoire permet une réduction des artéfacts, et la réplication sans recouvrement de ces motifs de base introduit une certaine régularité qui facilite l'interpolation des couleurs.

Le document US 2003/0210332 décrit une matrice de filtres couleur formée d'une pluralité de motifs de base. Toutefois, ce document n'enseigne pas le fait que les motifs de base sont répliqués sans recouvrement, chacun des motifs de base étant constitué de filtres couleur arrangés de façon pseudo aléatoire.

Selon l'invention, la limitation de la cohérence du mélange de l'information spatiale et chromatique dans la représentation de l'image réduit l'apparition d'artéfacts ayant un impact sur la qualité d'image.

L'acquisition des images ainsi faite permet aussi d'utiliser en partie des méthodes de post-traitement connues, par exemple celles développées dans le cas de Bayer, et d'améliorer leurs performances.

Selon l'invention, le capteur comporte une matrice de filtres couleur, dont le motif de base des filtres couleur est égal ou supérieur à 4x4 pixels d'une image et est inférieur à la taille de cette image ;

L'invention concerne également un procédé d'acquisition et de reconstruction de séquences d'images numériques, lesdites images étant filtrées lors de leur acquisition par ledit capteur à l'aide de ladite matrice de filtres couleur, en effectuant ainsi une acquisition des composantes rouge, verte et bleu pour une reconstruction d'au moins une image, à partir desdites composantes acquises de chaque image.

Selon des modes de mise en oeuvre particuliers de ce procédé :
- une décomposition en luminance et chrominance de l'image acquise est effectuée pour appliquer les filtres de reconstruction, cette décomposition réduisant la complexité des filtres de reconstruction ;
- une décomposition en luminance et en chrominance de l'image acquise est obtenue à l'aide d'un capteur à motif pseudo aléatoire pour la chrominance et d'un capteur dépourvu de matrice de filtres couleur pour la luminance ;
- la luminance est estimée et les trois composantes de la chrominance sont interpolées à partir des données acquises par le capteur à motif pseudo aléatoire ;
- la reconstruction de l'image est effectuée à partir de la luminance estimée et des trois composantes interpolées de la chrominance à partir de l'image captée ;
- la reconstruction de l'image est linéaire et fait intervenir uniquement une pondération d'un voisinage de pixel, a partir du motif de base et d'un voisinage ;
- la reconstruction de l'image est adaptative, non linéaire, et effectue une interpolation des chrominances ramenées en bande de base, via un calcul basé sur le gradient des basses fréquences de la luminance estimée par un filtre passe-bas normalisé, ledit gradient de la luminance indiquant le sens vertical ou horizontal d'interpolation des trois chrominances ;
- le démosaïçage est effectué par élimination des fréquences à risque par transfert des porteuses desdites chrominances en fréquences spatiales nulles.

Grâce à ce procédé d'acquisition et de reconstruction d'images et ses différentes mises en oeuvre, la qualité des images est améliorée et la complexité de la reconstruction est réduite.

L'estimation des coefficients du filtre linéaire de luminance réalisée à l'aide d'un capteur étant dépourvu de matrice de filtres couleur, avec lequel une image achromatique est captée, représente une alternative au calcul des coefficients par la méthode des moindres carrés de l'erreur quadratique entre un image intermédiaire en mosaïque simulée et une luminance estimée.

On entend par base de données d'images une collection d'images en couleur disposant de trois couleurs : rouge, verte et bleue à chaque pixel de l'image. Cette base de données est issue d'un système disposant de trois capteurs pour échantillonner les trois couleurs à chaque position spatiale.

Une mosaïque de la base de données d'images représente la simulation de l'effet de cette mosaïque de couleurs sur la base de données d'images. Pour obtenir une mosaïque de la base de données d'images, les couleurs des pixels qui ne sont pas présents dans cette mosaïque à la position considérée sont supprimées artificiellement.

Pour les mosaïques à répartition irrégulière, le calcul des gradients est adapté selon le voisinage de chaque pixel. La présente invention utilise cette propriété commune de toutes les mosaïques, c'est-à-dire que la luminance est localisée en bande de base, et propose donc un calcul de gradient sur les composantes basses fréquences de la luminance qui est uniforme sur toute l'image. Ce calcul met à profit les contours calculés par gradients sur les composantes basses fréquences de la luminance pour une meilleure interpolation de la chrominance.

L'invention se rapporte également à un système d'acquisition et de reconstruction de séquences d'images numériques pour la mise en oeuvre du procédé. Ce système est composé de modules d'acquisition et de traitement numérique connectés entre eux, comprenant au moins un capteur couleur à motif pseudo aléatoire, un module de compression en liaison avec un module de reconstruction, un module de stockage, un module d'affichage et une interface de sortie.

Selon des caractéristiques préférées :
- l'image est reconstruite, dans le module de reconstruction, par un procédé linéaire qui fait intervenir uniquement une pondération d'un voisinage de pixel ;
- l'image est reconstruite, dans le module de reconstruction, par un procédé adaptatif qui effectue une interpolation des chrominances ramenées en bande de base, via un calcul basé sur le gradient de la luminance estimée par un filtre passe-bas normalisé, ledit gradient indiquant pour l'image le sens vertical ou horizontal d'interpolations des chrominances ;

- l'image reconstruite dans le module de reconstruction est compressée par au moins un encodeur dans ce module de compression ;
- l'image reconstruite dans le module de reconstruction est compressée par au moins un encodeur compris dans le module de reconstruction.

De part l'optimisation du rapport complexité/qualité, la présente invention propose une solution très bien adaptée à la mise en oeuvre sur des supports ayant des contraintes de taille et de capacités de traitement, tels que ceux contenant des applications embarquées, par exemple les téléphones portables, les caméras de surveillance, ou les mini caméras d'acquisition comme les cyber caméras (webcams en langue anglaise).

En général, la présente invention vise tout système d'acquisition et de traitement d'images couleurs (par exemple les cameras haute définition, les photophones, les satellites), et est adaptée également pour un prétraitement pour tout format et système de compression d'images ou de séquences vidéos numériques.

La présente invention est une alternative de la méthode la plus répandue actuellement, c'est-à-dire de la méthode dite de Bayer, selon laquelle les contours de l'image sont mis à profit pour une meilleure interpolation de la chrominance, les contours étant calculés par gradient sur les composantes basses fréquences de la luminance.

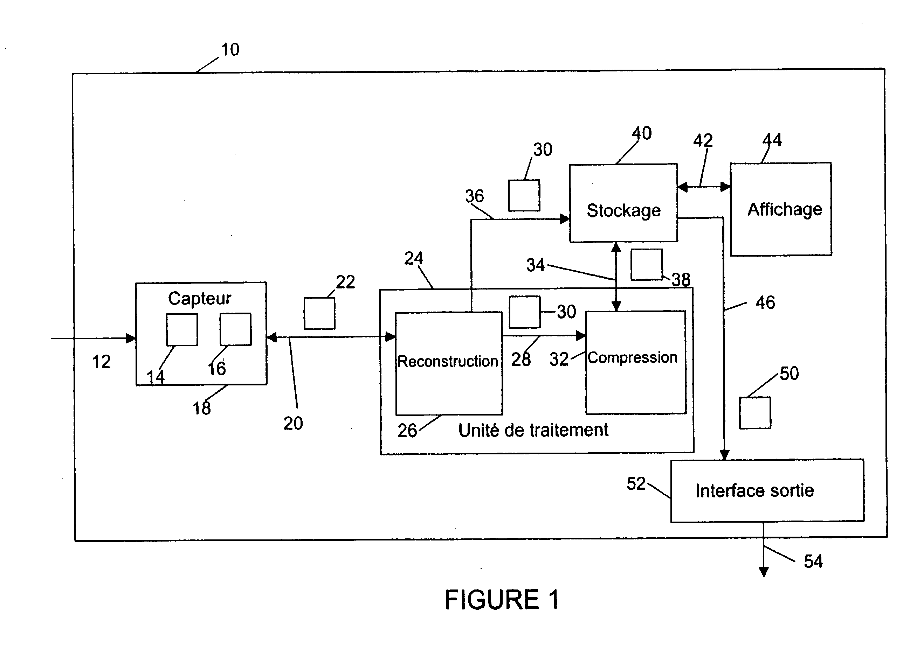

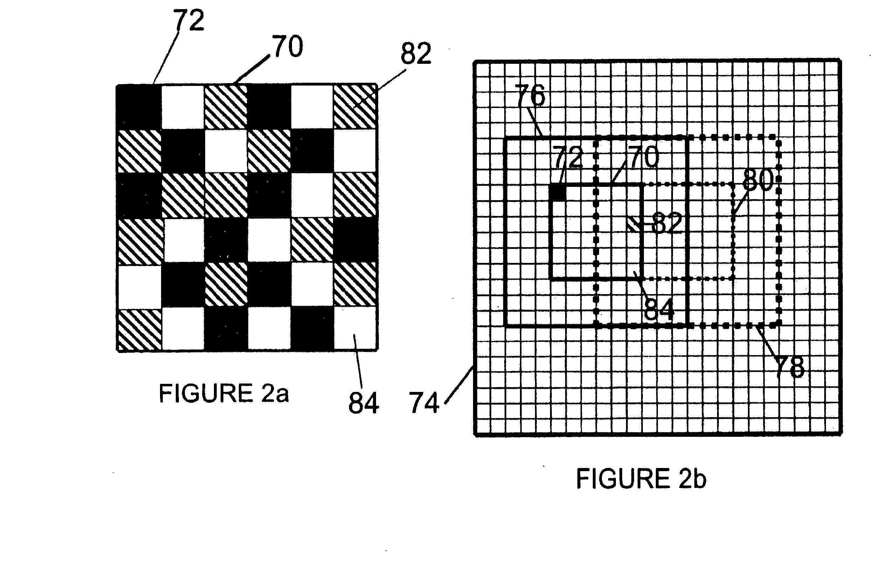

La présente invention sera mieux comprise ci-après à l'aide d'exemples de réalisation non limitatifs, en référence aux dessins annexés qui représentent respectivement :
- en figure 1, un exemple de système de mise en oeuvre du procédé selon l'invention à caméra numérique munie d'un capteur couleur à motif pseudo aléatoire ;
- en figures 2a et 2b , un premier exemple d'acquisition de l'image à partir d'une matrice d'un capteur pseudo aléatoire à l'aide d'un motif réduit et de reconstruction linéaire de l'image;
- en figures de 3a à 3i, un deuxième exemple d'acquisition à partir d'une matrice d'un capteur pseudo aléatoire, à l'aide d'un motif égal à la taille de l'image et de reconstruction adaptative ;
- en figures de 4a à 4i, ledit deuxième exemple d'acquisition à partir d'une matrice d'un capteur pseudo aléatoire, à l'aide d'un motif égal à la taille de l'image et de reconstruction adaptative.

Un exemple de système mettant en oeuvre le procédé d'acquisition par un capteur à motif pseudo aléatoire et du traitement des images numériques de la présente invention, composé de modules de traitement interconnectés entre eux, est présenté en référence à la figure 1.

Une caméra numérique 10 est constituée d'un capteur couleur à motif pseudo aléatoire 18 selon l'invention, une unité de traitement 24, comprenant un module de reconstruction 26 et un module de compression 32, un module de stockage 40, un module d'affichage 44 et une interface de sortie 52.

Une image 14 acquise par le capteur 18 via le lien 12, est filtrée à l'aide de la matrice de filtres couleur pseudo aléatoire 16, qui est déjà comprise dans le capteur. L'image filtrée 22 est transmise via le lien 20 à l'unité de traitement 24, plus précisément au module de reconstruction 26, effectuant l'application des filtres de reconstruction linéaire, et l'interpolation, au sein duquel est réalisée la reconstruction de l'image captée. L'unité de traitement 24 est capable aussi de communiquer avec le capteur 18 via le lien 20.

L'image reconstruite 30 en format brut est transmise à un module de stockage 40 via le lien 36 pour être sauvegardée. Egalement, l'image reconstruite 30 en format brut est directement transmise à un module d'affichage 44 pour être visualisée. Alternativement, les images reconstruites sauvegardées dans le module de stockage 40 sont transmises au module d'affichage 44 via le lien 42 et être visualisées ultérieurement.

Alternativement, l'image reconstruite 30 est transmise via le lien 28 à un module de compression 32 d'images en format brut. Le module de compression contient au moins un encodeur numérique. Alternativement, le module de compression 32 est compris dans le module de reconstruction 26. Après encodage, l'image compressée 38 est transmise au module de stockage 40 via le lien 34.

Alternativement, l'image compressée 38 est transmise au module d'affichage 44 pour être visualisée. Le module d'affichage 44 comporte au moins un décodeur numérique apte à interpréter l'image compressée 38. Alternativement, le module de compression récupère à partir du module de stockage 40, une image reconstruite brute pour la compresser.

A partir du module de stockage 40 ou du module d'affichage 44, l'image reconstruite 50, soit en format brut, soit en format compressé est transmise à une interface de sortie 52, via le lien 46. A partir de l'interface de sortie 52, l'image traitée comme décrit ci-dessus est envoyée via le lien 54 vers au moins un support numérique extérieur.

On décrit maintenant un capteur d'acquisition d'images numériques 18 selon l'invention. Un exemple de mise en oeuvre du procédé d'acquisition avec un capteur à motif aléatoire 18, et de reconstruction linéaire de l'image captée dans le module 26, est présenté en référence aux figures 2a et 2b.

Dans ce premier exemple d'acquisition d'une image 14 et de reconstruction de cette image 30, l'acquisition est effectuée avec une matrice 16 et un motif réduit 70 de taille nxn, avec « n » un entier naturel qui est supérieur ou égal à 4.

La matrice de filtres couleur 16 formant le capteur 18 est constituée d'une pluralité de motifs de base 70 identiques répliqués sans recouvrement. Chacun des motifs de base 70 est constitué de filtres couleur 72, 82, 84 arrangés de façon pseudo aléatoire, de sorte qu'il existe, dans chacun des motifs de base 70, un pas variable entre deux filtres couleur consécutifs de même type dans les directions horizontales et/ou verticales du motif de base.

La reconstruction mise en oeuvre est linéaire et fait intervenir une pondération d'un voisinage de pixels 76, de dimension mxm, m étant un nombre entier naturel, supérieur à n, tout en réduisant la complexité des filtres de reconstruction. Alternativement, le motif de base et le voisinage sont rectangulaires.

Egalement, une décomposition en luminance et en chrominance est appliquée.

Pour la calibration des coefficients des filtres linéaires, le procédé est aussi réalisé à l'aide de l'utilisation d'un module étant dépourvu de matrices de filtres couleur. Ce module permet l'acquisition d'une image achromatique qui est utilisée comme consigne à partir de laquelle est effectuée la détermination des coefficients à motif aléatoire par la méthode des moindres carrés.

La reconstruction de l'image est ensuite effectuée à partir de la luminance estimée et des trois composantes chromatiques interpolées.

Dans cet exemple, le procédé est présenté selon les étapes I à III suivantes:
- L'étape I de définitions de la matrice de filtres couleur 16 au regard de la figure 2a illustrant un exemple d'arrangement d'un motif 70 de taille 6x6, avec mise en évidence du motif de base, avec un voisinage 76 de taille 12x12.

Un motif de base 70 de taille réduite est défini à la figure 2a, constitué de pixels 72 représentés en noir (correspondant à la couleur verte), de pixels 82 représentés en rayé (correspondant à la couleur bleu et de pixels 84 représentés en blanc (correspondant à la couleur rouge). Par exemple un motif de taille 6x6 est composé d'un arrangement pseudo aléatoire de filtres couleur, c'est-à-dire que le pas, entre deux filtres consécutifs du même type, est variable dans les directions horizontale ou verticale de la matrice. Ce motif de base est appliqué sur des blocs de même taille pour l'ensemble de l'image. Ce motif irrégulier s'applique sur un maillage carré ou hexagonal centré, pour un nombre de filtres quelconque et dont les filtres sont de transmission quelconque.

La définition de ce motif est effectuée à partir de la considération d'alternance des filtres dans le voisinage, afin d'éviter les agglomérats de filtres de la même couleur, évitant ainsi les apparitions de « fausses couleurs ». La solution retenue est avec deux filtres 72 et 84 de sensibilité à la longueur d'onde très proche (autour du vert et du rouge), couvrant pseudo aléatoirement la majorité d'un bloc de base et avec un troisième filtre 82 parsemé pseudo aléatoirement dont le maximum de sensibilité est dans le bleu. Cette configuration s'approche de celle du système visuel humain.

Une réplication sans recouvrement de ce motif de base 70 est appliquée sur l'ensemble de la matrice 16 du capteur 18. Le capteur proposé est donc une combinaison entre un capteur périodique, où le pas entre deux mêmes motifs de filtres successifs est constant et un capteur totalement pseudo aléatoire, à l'échelle de blocs de pixels de taille 6x6.
- La construction des filtres de reconstruction linéaire à partir des calculs suivants constitue l'étape II.

Un calcul des coefficients des filtres de reconstruction est effectué. C'est une étape de calibration pour la mise en oeuvre de la reconstruction, qui est effectuée une ou plusieurs fois en fonction du changement des caractéristiques spatiales (optiques) ou spectrales (ajout de filtres colorés) de l'image acquise. Cette étape est réalisée soit par une simulation sur une base de données d'images, soit par une construction et une application d'un module étant dépourvu de matrice de filtres couleur.

La soustraction de la luminance de la mosaïque des couleurs est effectuée. Un calcul de l'information de couleur composée des chrominances codées en opposition de couleurs est appliqué. Les nouveaux coefficients de pondération du voisinage sont utilisés pour réaliser l'interpolation de la chrominance, c'est-à-dire des trois composantes chromatiques.

Tout d'abord, un calcul des coefficients des filtres de reconstruction est effectué. Ces filtres servent à la pondération de l'influence des pixels dans le voisinage 76.

Ensuite est défini un choix des filtres de reconstruction directe des couleurs manquantes dans la mosaïque 74 en utilisant une base de données d'images significative.

Dans ce cas, l'action de la mosaïque de couleur 74 est simulée, par suppression dans cette mosaïque des couleurs manquantes sur l'image couleur, résultant en l'obtention d'une image intermédiaire.

Ensuite, une image de luminance est estimée, comme la somme pondérée pour chaque pixel des valeurs rouge, vert et bleu des images de la base de données, respectivement avec des coefficients pR, pG et pB des composantes R, G et B. Ces coefficients pR, pG et pB sont les proportions de chaque filtre qui compose la mosaïque pseudo aléatoire. La luminance, c'est-à-dire l'information spatiale achromatique, est estimée pour chaque pixel, par exemple une des valeurs optimales des coefficients de pondération est pR = pG = pB = 1/3.

Les coefficients de la batterie des trente-six filtres de taille variable, sont calculés comme la solution aux moindres carrés de l'erreur quadratique entre l'image intermédiaire en mosaïque simulée et la luminance estimée.

Alternativement, une estimation des filtres de la luminance est basée sur l'utilisation d'un second module capteur dépourvu de matrice de filtre couleur. En effet, la luminance correspond à un signal qui serait mesuré par le capteur s'il était dépourvu de la matrice de filtres couleurs. La démarche consiste donc à utiliser un capteur qui est dépourvu de la matrice de filtres couleur pour mesurer la luminance et qui est pourvu de la matrice de filtres couleurs pour mesurer la mosaïque de la base de données d'images. Plusieurs prises de vue de la même scène sont effectuées avec ces deux modules, afin d'estimer le filtre de luminance à partir de cette base de données des prises de vue. Cette approche permet de réaliser une configuration des filtres, qui représente le mieux les caractéristiques optiques et spectrales du système d'acquisition.

L'estimation des filtres de la chrominance est également effectuée par la méthode des moindres carrés. Cette méthode permet d'estimer les filtres d'interpolation de la chrominance de taille réduite, c'est-à-dire la réduction en pratique de la surface du voisinage 76.
- Enfin, une étape III de reconstruction linéaire de l'image 30 est effectuée en référence à la figure 2b.

Les coefficients des filtres étant calculés à l'étape II, la reconstruction de l'information est réalisée bloc par bloc 70, 80. Le calcul de la valeur du pixel est effectué en utilisant une somme pondérée de tous les pixels du voisinage 76, le même calcul avec les trente six filtres différents est effectué pour tous les pixels 72, 82 et 84 du bloc. Ce calcul est également effectué pour le bloc suivant 80 (en pointillé sur la figure 2b), et le voisinage suivant 78 (en pointillé sur la même figure 2b), et pour l'ensemble de l'image 30. Alternativement, ce calcul est appliqué pour une taille de bloc et de voisinage quelconque.

La reconstruction de l'image 30 est faite avec la somme de la luminance estimée et de la chrominance interpolée.

Le procédé est définit en en deux temps, en un premier temps une décomposition en luminance et chrominance, et en un deuxième temps, une recomposition de l'image à partir de la luminance estimée et de la chrominance interpolée. Cela permet d'utiliser deux matrices de filtres différentes pour l'estimation de la luminance et pour l'interpolation de la chrominance et d'éliminer ainsi les domaines de fréquences spatiales intermédiaires où l' « aliasing » (« aliasing », repliement de spectre en langue anglaise) apparaît.

Avantageusement, un autre mode de réalisation de la reconstruction consiste à calculer la chrominance comme la différence entre la luminance et la mosaïque 74 des couleurs, cela correspond à l'utilisation d'un filtre de chrominance inverse à celui de la luminance. Alternativement, afin de réduire les artefacts, les filtres passe-bas de la luminance et passe-haut de la chrominance définissent les bandes spectrales suffisamment séparées pour diminuer sensiblement le recouvrement spectral. C'est une autre manière de supprimer les fréquences spatiales intermédiaires, où le risque d'aliasing (repliement de spectre en langue anglaise) est plus élevé.

Un deuxième exemple de réalisation d'un procédé d'acquisition d'une image 14 et de reconstruction de cette image 30, schématisé aux figures de 3a à 3i, est l'acquisition de l'image avec une matrice 16 de filtres couleur de taille égale à celle de l'image. La matrice 16 est telle que décrite précédemment, c'est-à-dire qu'elle est constituée d'une pluralité de motifs de base identiques répliqués sans recouvrement. Chacun des motifs de base est constitué de filtres couleur arrangés de façon pseudo aléatoire, de sorte qu'il existe, dans chacun des motifs de base, un pas variable entre deux filtres couleur consécutifs de même type dans les directions horizontales et/ou verticales du motif de base.

Une décomposition en luminance et en chrominance est également appliquée.

Une reconstruction adaptative de l'image à partir des chrominances ramenées en bande de base est effectuée. Cette reconstruction est réalisée via un calcul basé sur le gradient de la luminance estimée par un filtre passe-bas normalisé en R, G et B , dont le gradient indique si l'interpolation des chrominances doit être faite dans le sens vertical ou horizontal de l'image. On entend par le terme « gradient horizontal » une évolution relative aux lignes de l'image et par « gradient vertical» une évolution relative aux colonnes de l'image.

Cet exemple permet également d'utiliser le capteur 18 et le module de reconstruction 26 pour la reconstruction de l'image captée 14 avec les mêmes avantages, en mettant en place un deuxième exemple de réalisation dont les étapes sont présentées et les résultats du traitement sont schématisés aux figures de 3a à 3i.

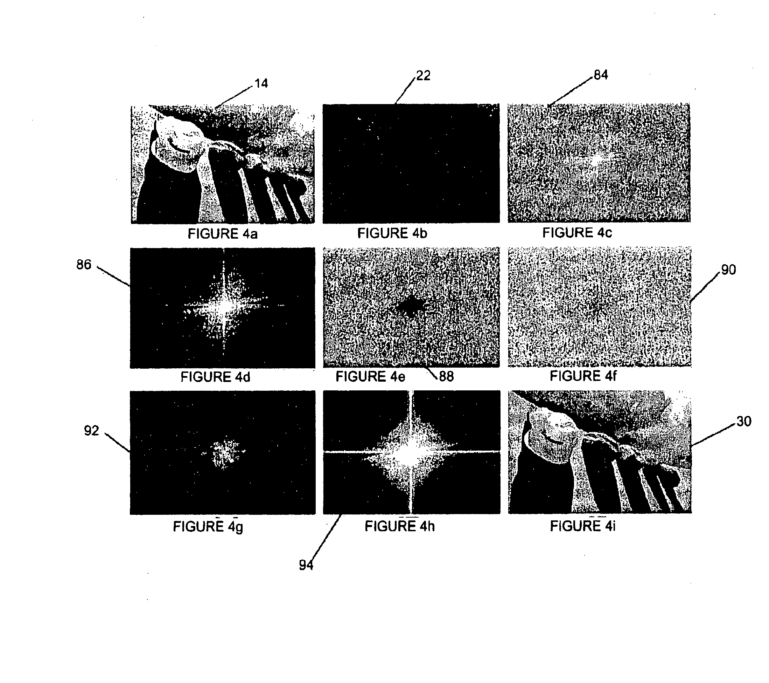

Les figures de 3a à 3i sont respectivement la schématisation des figures 4a (image originale 14), 4b (image captée 22), 4c (spectre de l'image captée 84), 4d (basses fréquences estimées contenant la luminance 86), 4e (les trois chrominances plus les hautes fréquences de luminance 88), 4f (la chrominance rouge initiale plus les hautes fréquences de luminance 90), 4g (chrominance rouge interpolée 92), 4h (luminance estimée 94 à nouveau, à partir des chrominances interpolées) et 4i (image reconstruite 22).

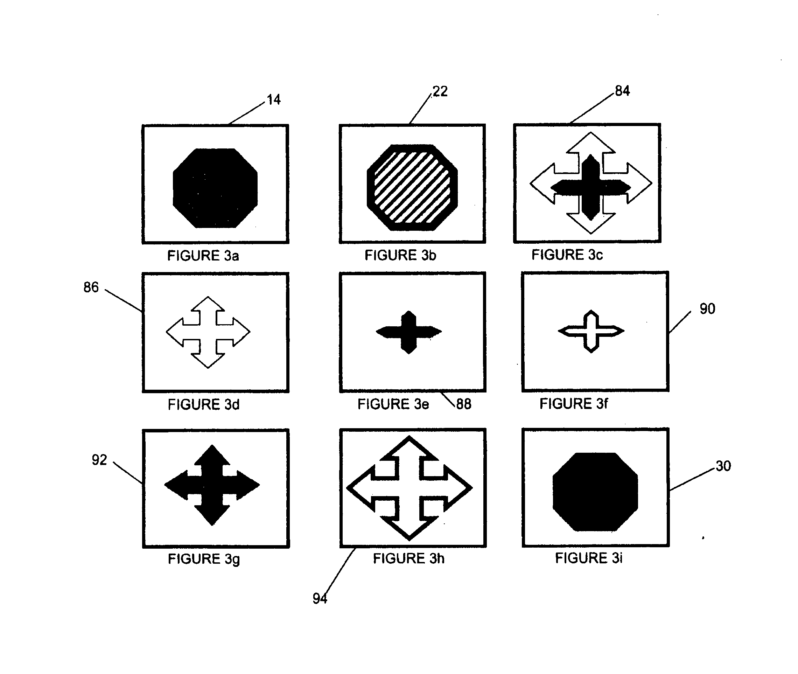

Une image originale 14 (figure 3a) est échantillonnée par une matrice 16 de filtres couleur. L'image échantillonnée 22 (figure 3b) présente un spectre 84 (figure 3c), dont les basses fréquences estimées contiennent la luminance 86 (figure 3d) et les trois chrominances plus les hautes fréquences de luminance 88 (figure 3e). Un démultiplexage des trois chrominances de 88 (figure 3e) est effectué, par exemple ici est illustrée la chrominance rouge initiale plus les hautes fréquences de luminance 90 (figure 3f). Les trois chrominances sont ensuite interpolées à l'aide du procédé adaptatif, par exemple la chrominance rouge 92 (figure 3g) est interpolée à partir de la chrominance rouge initiale de 90 (figure 3f). La luminance 94 (figure 3h) est estimée à nouveau à partir des chrominances interpolées, c'est-à-dire à partir de la chrominance rouge 92 et des chrominances verte et bleue. L'image 30 est finalement reconstruite (figure 3i) à partir de la luminance estimée et des trois composantes interpolées de la chrominance.

L'acquisition de l'image est effectuée par un capteur couleur 18, dans lequel est placée une matrice 16 de filtres couleur. La répartition des couleurs doit être telle que les porteuses de chrominance, définies par la transformée de Fourier des fonctions de modulation de chacune des trois chrominances, forment une modulation spectrale, avantageusement la plus blanche possible pour réduire les effets de cohérence de la chrominance sur la luminance, comme par exemple dans le cas où les porteuses de chrominances sont peu présentes dans les basses fréquences spatiales de la luminance.

Le procédé d'acquisition et de reconstruction s'articule par exemple autour des trois étapes I à III suivantes :
- Etape I d'estimation et retrait de la luminance 86 (figure 3d) de l'image 22.

Le traitement commence par l'acquisition de l'image originale 14, en une image captée 22 (figure 3b). Une transformation spectrale de l'image 22 est appliquée par exemple, pour obtenir le spectre 84 (figure 3c). Ensuite, sont estimées par un filtrage les fréquences les plus basses, les basses fréquences de la luminance.

Le filtre utilisé est normalisé en R,G et B, c'est-à-dire qu'il a pour fonction de respecter à chaque position spatiale, une contribution à hauteur de pR, pG et pB, respectivement pour chaque couleur R, G et B. Autrement dit, à chaque pixel, une normalisation du filtre a lieu pour que la somme des coefficients correspondant aux filtres de couleur R, G et B soit égale respectivement à pR, pG et pB de la luminance estimée.

La luminance 86 (figure 3d) correspond aux fréquences les plus basses, estimée à partir de l'image 22 du capteur, est retirée de cette image 22, en créant ainsi un spectre 88 (figure 3e) avec un trou en basses fréquences spatiales dans le spectre 84 (figure 3c) de l'image 22.
- Interpolation des chrominances à partir du gradient de la luminance (étape II).

Le démultiplexage de l'image 22 est ensuite appliqué par isolation des images correspondant aux sous matrices de mêmes sensibilités spectrales, par exemple à la chrominance rouge de 90 (figure 3f). Cette opération a pour effet de ramener les porteuses de chrominance en fréquences spatiales nulles, c'est-à-dire au centre du spectre.

Une interpolation est réalisée sur les chrominances ramenées en bande de base. L'avantage de ce procédé est de pouvoir utiliser une interpolation adaptative, basée sur un calcul du gradient des basses fréquences de la luminance 86 (figure 3d) estimée.

Ce gradient indique en effet, si une interpolation des couleurs est faite suivant la verticale, l'horizontale ou en moyenne de tous les points voisins : si le gradient vertical est plus fort que le gradient horizontal, un contour est considéré comme horizontal, et l'interpolation des couleurs n'est pas effectuée à travers ce contour, mais plutôt le long du contour, c'est-à-dire horizontalement dans ce cas. Le gradient de la luminance 86 (figure 3d), respectivement horizontal et vertical, est utilisé pour décider si l'interpolation des couleurs est faite suivant le sens horizontal ou vertical, en fonction de la valeur respective des gradients. Ainsi, la chrominance rouge 92 (figure 3g) est interpolée.
- Calcul de la luminance et de la reconstruction adaptative de l'image (étape III).

Etant donnée la nature linéaire de la composition de la luminance et de la chrominance, les chrominances interpolées par le procédé adaptatif sont retirées de l'image 22 acquise par le capteur, pour récupérer toutes les bandes de fréquence de la luminance 94 (figure 3h). Cette luminance est alors calculée comme étant le résidu de ce qui n'est pas chromatique au sens de l'adaptation en luminance.

Ensuite, la reconstruction de l'image 30 est effectuée à partir de la luminance 94 estimée à nouveau (figure 3i) et des trois chrominances R, G, B interpolées.

La présente invention n'est pas limitée aux exemples de réalisation décrits. Il est en effet possible de définir des matrices de capteur de filtres couleur pseudo aléatoires avec différents tailles et formes de motifs pour l'acquisition, les motifs pseudo aléatoires pouvant être périodiques ou non périodiques par exemple. Concernant la reconstruction, une multitude de procédés peuvent être appliquées, contenant différents nombres d'étapes et différents types de calculs. Le module de reconstruction peut être accueilli dans une machine hôte externe ou intégré dans l'unité de traitement numérique.

Il est également possible de définir des matrices de filtres couleur différentes, adaptées en fonction des différents types d'applications, par exemple photos satellite, imagerie médicale ou autres.

Généralement, la reconstruction en temps réel de l'image est partielle dans une caméra, afin de permettre l'affichage des images en temps réel et d'avoir la possibilité d'effectuer des prises de vue successives.

En ce qui concerne les images satellites par exemple, ou tous les dispositifs qui ne nécessitent pas de visualisation immédiate du résultat et fonctionnent en temps différé, un enregistrement des données captées est effectué en format brut et ensuite la reconstruction complète des couleurs est réalisée en différé.

Alternativement, le procédé permet aussi l'adaptation de la luminance et la mise en oeuvre d'un filtrage récursif.

De plus, la présente invention est applicable à tout type de capteurs, quelle que soit la technologie CDD (initiales de « Charged Coupled Device » en anglais, soit dispositif à transfert de charge) ou CMOS (circuits Métal Oxyde Semi-conducteur complémentaires) et quelle que soit la taille du capteur.

## Revendications

1. Capteur d'acquisition d'images numériques (18) comprenant une matrice (16) de filtres couleur, la matrice étant constituée d'une pluralité de motifs de base identiques (70) répliqués sans recouvrement selon une direction verticale et une direction horizontale, chacun des motifs de base étant constitué de filtres couleur (72, 82, 84) **caractérisé en ce que** les filtres couleur sont arrangés de façon pseudo aléatoire, de sorte qu'il existe, dans chacun des motifs de base (70), un pas variable entre deux filtres couleur consécutifs de même type dans les directions horizontales et/ou verticales du motif de base,
dans lequel le motif de base (70) des filtres couleur de la matrice de filtres couleur est égal ou supérieur à 4x4 pixels d'une image et est inférieur à la taille de cette image, les filtres couleur étant disposés avec un arrangement irrégulier, préalablement indéterminé, dans ledit motif de base,
et dans lequel un ensemble constitué par un motif de base (70) et un voisinage immédiat (76) de ce motif de base comporte des filtres couleur arrangés spatialement pour éviter un agglomérat de filtres de la même couleur dans ledit ensemble, évitant ainsi l'apparition de fausses couleurs.

2. Procédé d'acquisition et de reconstruction d'images numériques à partir d'un capteur selon l'une quelconque des revendications précédentes, **caractérisé en ce qu'**il consiste à filtrer lesdites images (14) lors de leur acquisition par ledit capteur (18) à l'aide de ladite matrice de filtres couleur (16), en effectuant ainsi une acquisition des composantes rouge, verte et bleu pour une reconstruction d'au moins une image (30), à partir desdites composantes acquises de chaque image (22).

3. Procédé selon la revendication précédente, dans lequel une décomposition en luminance et chrominance de l'image acquise (22) est effectuée.

4. Procédé selon la revendication 2, dans lequel une décomposition en luminance et chrominance de l'image acquise (22) est effectuée, à l'aide du capteur selon l'une quelconque des revendications 1 à 2 pour l'acquisition de la chrominance et à l'aide d'un capteur dépourvu de matrice de filtres couleur pour l'acquisition de la luminance.

5. Procédé selon l'une quelconque des revendications 3 ou 4, dans lequel la luminance est estimée et les trois composantes de la chrominance sont interpolées à partir des données acquises par le capteur à motif pseudo aléatoire (18) selon l'une des revendications 1 à 2.

6. Procédé selon l'une quelconque des revendications 3 à 5, dans lequel la reconstruction de l'image (30) est effectuée à partir de la luminance estimée et des trois composantes de la chrominance interpolées à partir de l'image captée (22).

7. Procédé selon l'une quelconque des revendications 3 à 6, dans lequel la reconstruction de l'image (30) est linéaire et fait intervenir uniquement une pondération d'un voisinage de pixels (72), (82) et (84), à partir du motif de base (70) et d'un voisinage (76).

8. Procédé selon l'une quelconque des revendications 3 à 6, dans lequel la reconstruction de l'image (30) est adaptative et non linéaire, et effectue une interpolation des chrominances du spectre (88) ramenées en bande de base, via un calcul basé sur le gradient de la luminance (86) estimée par un filtre passe-bas normalisé, ledit gradient des basses fréquences de la luminance (86) indiquant le sens vertical ou horizontal d'interpolation des trois chrominances.

9. Procédé selon la revendication 8, dans lequel un démosaïçage est effectué par élimination des fréquences à risque par transfert des porteuses desdites chrominances en fréquences spatiales nulles.

10. Système d'acquisition d'images pour la mise en oeuvre du procédé selon l'une quelconque des revendications 2 à 9, composé de modules d'acquisition et de traitement numérique connectés entre eux, comprenant au moins un capteur (18) selon l'une des revendications 1 à 2, un module de compression (32) en liaison avec un module de reconstruction (26), un module de stockage (40), un module d'affichage (44) et une interface de sortie (52).

11. Système d'acquisition et de reconstruction d'images numériques selon la revendication 10 pour la mise en oeuvre du procédé selon la revendication 7 ou selon les revendications 8 et 9, dans lequel l'image (30) est reconstruite dans le module de reconstruction (26).

12. Système d'acquisition et de reconstruction d'images numériques selon la revendication 11 pour la mise en oeuvre du procédé selon l'une quelconque des revendications 7 à 9, dans lequel l'image reconstruite (30) dans le module de reconstruction (26) est compressée par au moins un encodeur dans le module de compression (32).

13. Système d'acquisition et de reconstruction d'images numériques selon la revendication 11 pour la mise en oeuvre du procédé selon l'une quelconque des revendications 7 à 9, dans lequel l'image reconstruite (30) dans le module de reconstruction (26) est compressée par au moins un encodeur (32) compris dans le module de reconstruction (26).

## Patentansprüche

1. Digitalbild-Aufnahmesensor (18), umfassend eine Matrix (16) von Farbfiltern, wobei die Matrix aus einer Mehrzahl von identischen Grundmustern (70) aufgebaut ist, welche überlappungsfrei nach einer vertikalen Richtung und einer horizontalen Richtung repliziert sind, wobei jedes der Grundmuster aus Farbfiltern (72, 82, 84) aufgebaut ist, **dadurch gekennzeichnet, dass** die Farbfilter pseudo-zufällig angeordnet sind, so dass es in jedem der Grundmuster (70) eine variable Schrittweite zwischen zwei aufeinander folgenden Farbfiltern des selben Typs in den horizontalen Richtungen oder/und vertikalen Richtungen des Grundmusters gibt,
wobei das Grundmuster (70) der Farbfilter in der Matrix aus Farbfiltern gleich oder größer als 4x4 Pixel eines Bildes ist und kleiner als die Größe dieses Bildes ist, wobei die Farbfilter in einer unregelmäßigen, zuvor unbestimmten Anordnung in dem Grundmuster angeordnet sind, und wobei eine aus einem Grundmuster (70) und einer unmittelbaren Nachbarschaft (76) dieses Grundmusters aufgebaute Gruppe räumlich angeordnete Farbfilter zum Vermeiden einer Ansammlung von Filtern derselben Farbe in der Gruppe umfasst, wodurch somit das Auftreten von Farbfehlern vermieden wird.

2. Verfahren zum Aufnehmen und Rekonstruieren von digitalen Bildern von einem Sensor nach einem der vorhergehenden Ansprüche, **dadurch gekennzeichnet, dass** es ein Filtern der Bilder (14) bei ihrer Aufnahme durch den Sensor (18) mit Hilfe der Matrix aus Farbfiltern (16) umfasst, wodurch eine Aufnahme der roten, grünen und blauen Komponenten für eine Rekonstruktion wenigstens eines Bildes (30) aus den von jedem Bild (22) aufgenommenen Komponenten ausgeführt wird.

3. Verfahren nach dem vorhergehenden Anspruch, wobei eine Zerlegung nach Leuchtdichte und Chrominanz des aufgenommenen Bildes (22) durchgeführt wird.

4. Verfahren nach Anspruch 2, wobei eine Zerlegung nach Leuchtdichte und Chrominanz des aufgenommenen Bildes (22) durchgeführt wird, mit Hilfe des Sensors nach einem der Ansprüche 1 bis 2 zum Aufnehmen der Chrominanz und mit Hilfe eines Sensors, welcher frei ist von einer Matrix aus Farbfiltern, zum Aufnehmen der Leuchtdichte.

5. Verfahren nach einem der Ansprüche 3 oder 4, wobei die Leuchtdichte abgeschätzt wird, und die drei Komponenten der Chrominanz aus den von dem Sensor mit pseudo-zufälligem Muster (18) nach einem der Ansprüche 1 bis 2 aufgenommenen Daten interpoliert werden.

6. Verfahren nach einem der Ansprüche 3 bis 5, wobei die Rekonstruktion des Bilds (30) aus der geschätzten Leuchtdichte und den drei aus dem aufgenommenen Bild (22) interpolierten Komponenten der Chrominanz durchgeführt wird.

7. Verfahren nach einem der Ansprüche 3 bis 6, wobei die Rekonstruktion des Bilds (30) linear ist und nur eine Gewichtung einer Nachbarschaft der Pixel (72), (82) und (84) aus dem Grundmuster (70) und einer Nachbarschaft (76) einschließt.

8. Verfahren nach einem der Ansprüche 3 bis 6, wobei die Rekonstruktion des Bildes (30) adaptiv und nicht-linear ist, und eine Interpolation der Chrominanzen des Spektrums (88) durchführt, welche in das Grundband zurückgeführt werden, mittels einer Berechnung auf Grundlage des Gradienten der Leuchtdichte (86), welcher durch einen normierten Tiefpass-Filter geschätzt wird, wobei der Gradient der tiefen Frequenzen der Leuchtdichte (86) die vertikale oder horizontale Richtung der Interpolation der drei Chrominanzen anzeigt.

9. Verfahren nach dem Anspruch 8, wobei ein Demosaicing durch Eliminieren von Risiko-Frequenzen durch Transfer von Trägern der Chrominanzen mit Ortsfrequenzen null durchgeführt wird.

10. System zum Aufnehmen von Bildern zum Durchführen des Verfahrens nach einem der Ansprüche 2 bis 9, aufgebaut aus Digital-Aufnahme-und Behandlungsmodulen, welche miteinander verbunden sind, ferner umfassend wenigstens einen Sensor (18) nach einem der Ansprüche 1 bis 2, ein mit einem Rekonstruktionsmodul (26) in Verbindung stehendes Kompressionsmodul (32), ein Speichermodul (40), ein Anzeigemodul (44) und eine Ausgabe-Schnittstelle (52).

11. System zum Aufnehmen und Rekonstruieren von digitalen Bilden nach Anspruch 10, zum Durchführen des Verfahrens nach Anspruch 7 oder nach den Ansprüchen 8 und 9, wobei das Bild (30) in dem Rekonstruktionsmodul (26) rekonstruiert wird.

12. System zum Aufnehmen und Rekonstruieren von digitalen Bildern nach Anspruch 11 zum Durchführen des Verfahrens nach einem der Ansprüche 7 bis 9, wobei das in dem Rekonstruktionsmodul (26) rekonstruierte Bild (30) von wenigstens einem Enkoder in dem Kompressionsmodul (32) komprimiert wird.

13. System zum Aufnehmen und Rekonstruieren von digitalen Bildern nach Anspruch 11 zum Durchführen des Verfahrens nach einem der Ansprüche 7 bis 9, wobei das in dem Rekonstruktionsmodul (26) rekonstruierte Bild (30) von wenigstens einem in dem Rekonstruktionsmodul (26) vorgesehenen Enkoder (32) komprimiert wird.

## Claims

1. A digital image acquisition sensor (18) comprising an array (16) of colour filters, the array consisting of a plurality of identical basic patterns (70) which are replicated with no overlap according to a vertical direction and an horizontal direction, each basic pattern being formed by colour filters (72, 82, 84), **characterized in that** said color filters are pseudo-randomly arranged, such that each basic pattern (70) contains a variable pitch between two consecutive same-type colour filters in the horizontal and/or vertical directions of the basic pattern,
in which the basic pattern (70) of the colour filters of the array of colour filters is equal to or larger than 4x4 pixels of an image and is smaller than the size of said image, the colour filters being arranged with an irregular arrangement, previously indeterminate, in said basic pattern,
and in which a set constituted by a basic pattern and an immediate neighborhood (76) of this pattern comprises colour filters spatially arranged to avoid an agglomerate of filters of the same colour in said set, thus avoiding occurrence of false colours.

2. A method for acquiring and reconstructing digital images from a sensor according to any preceding claim, **characterized in that** said method comprises filtering said images (14) during the acquisition thereof by said sensor (18) by means of said array of colour filters (16), thus carrying out acquisition of the red, green and blue components for reconstruction of at least one image (30), from said components acquired from each image (22).

3. A method according to the previous claim, wherein a luminance and chrominance decomposition of the acquired image (22) is carried out.

4. A method according to claim 2, wherein a luminance and chrominance decomposition of the acquired image (22) is carried out, by means of the sensor according to any of claims 1 to 2, for acquisition of the chrominance and by means of a second sensor free of an array of colour filters for acquisition of the luminance.

5. A method according to any one of claims 3 or 4, wherein the luminance is estimated and the three components of the chrominance are interpolated from the data acquired by the pseudo-random pattern sensor (18) according to any of claims 1 to 2.

6. A method according to any one of claims 3 to 5, wherein the reconstruction of the image (30) is carried out from the estimated luminance and the three components of the chrominance interpolated from the acquired image (22).

7. A method according to any one of claims 3 to 6, wherein the reconstruction of the image (30) is linear and only involves a weighting of a neighborhood of pixels (72), (82) and (84), from the basic pattern (70) and from a neighborhood (76).

8. A method according to any one of claims 3 to 6, wherein the reconstruction of the image (30) is adaptive and non-linear, and carries out an interpolation of the chrominances of the spectrum (88) brought back into the baseband, via a calculation based on the gradient of the luminance (86) estimated by a standardised low-pass filter, said gradient of the low frequencies of the luminance (86) indicating the vertical or horizontal direction of interpolation of the three chrominances.

9. A method according to claim 8, wherein demosaicing is carried out by eliminating high-risk frequencies by transfer of carriers of said zero spatial frequency chrominances.

10. An image acquisition system for implementing the method according to any one of claims 2 to 9, comprising digital acquisition and processing modules connected with one another, including the sensor (18) according to claims 1 to 2, a compression module (32) connected to a reconstruction module (26), a storage module (40), a display module (44) and an output interface (52).

11. A digital image acquisition and reconstruction system according to claim 10 for implementing the method according to claim 7 or according to claims 8 and 9, wherein the image (30) is reconstructed in the reconstruction module (26).

12. A digital image acquisition and reconstruction system according to claim 11 for implementing the method according to any of claims 7 to 9, wherein the image reconstructed (30) in the reconstruction module (26) is compressed by at least one encoder in the compression module (32).

13. A digital image acquisition and reconstruction system according to claim 11 for implementing the method according to claim 7 or according to any of claims 7 to 9, wherein the image reconstructed (30) in the reconstruction module (26) is compressed by at least one encoder (32) included in the reconstruction module (26).
